# EUROPEAN PATENT APPLICATION

(11) **EP 4 831 026 A1**
(43) Date of publication of application: **28.10.2026**
(21) Application number: 26173468.5
(22) Date of filing: 20.04.2026
(51) Int. Cl.: B60W 30/18, B60W 30/02, B60W 30/182

(54) **CONTROL APPARATUS FOR ALL-WHEEL DRIVE VEHICLE**

(30) Priority: 24.04.2025 JP 2025072727
(71) Applicant: Toyota Jidosha Kabushiki Kaisha, Toyota-shi, Aichi-ken 471-8571 (JP)
(72) Inventor: SEKI, Shuji, Toyota-shi, 471-8571 (JP); TAKAHASHI, Tsuyoshi, Toyota-shi, 471-8571 (JP); MIZUNO, Masashi, Toyota-shi, 471-8571 (JP); KOBAYASHI, Naofumi, Toyota-shi, 471-8571 (JP)
(74) Representative: D Young & Co LLP

(57) **Abstract**

A control apparatus (50) for controlling a driving force (Fd) of an all-wheel drive vehicle (10) that includes front wheels (12) and rear wheels (14). The control apparatus (50) includes a drive controller (52) that is configured, during running of the vehicle (10) with a low-friction-road-surface running control mode, to cause a front driving force (Fdf) for driving the front wheels (12) and a rear driving force (Fdr) for driving the rear wheels (14), and to control the front driving force (Fdf) and the rear driving force (Fdr) such that a rear distribution ratio (Fdr/Fd) as a ratio of the rear driving force (Fdr) to a total driving force (Fd), which is a sum of the front driving force (Fdf) and the rear driving force (Fdr), is not higher than half of a front distribution ratio (Fdf/Fd) as a ratio of the front driving force (Fdf) to the total driving force (Fd), in a normal running state that is other than a running starting state during running of the all-wheel drive vehicle (10).

## Description

### FIELD OF THE INVENTION

The present invention relates to a control of distribution of driving force between front and rear wheels of a vehicle.

### BACKGROUND OF THE INVENTION

There is well known a vehicle driving-force control apparatus for controlling a driving force of an all-wheel drive vehicle. A vehicle behavior control apparatus disclosed in JP 2014-237386 A is an example of such a control apparatus. This Japanese Patent Application Publication discloses that the vehicle has a plurality of kinds of running modes that include a low-friction-road-surface running mode for driving the vehicle on a low-friction road surface, and that wheel braking force and driving force are controlled to drive the vehicle on the low-friction road surface when the low-friction-road-surface running mode is established.

### SUMMARY OF THE INVENTION

When the all-wheel drive vehicle is in a running starting state, it might be possible to increase a rear distribution ratio to improve a starting performance. On the other hand, when the all-wheel drive vehicle is in a normal running state that is other than the running starting state, if the rear distribution ratio is not within an appropriate range, for example, if the rear distribution ratio is made high, a straight running stability could be increased but a maneuverability could be reduced. Such a tendency is particularly noticeable when the all-wheel drive vehicle runs on a low-friction road surface. The rear distribution ratio is a ratio of a rear driving force to a total driving force that is a sum of front and rear driving forces.

The present invention was made in view of the background art described above. It is therefore an object of the present invention to provide a control apparatus for controlling a driving force of an all-wheel drive vehicle, wherein the control apparatus is capable of suppressing a reduction of maneuverability while ensuring a stability of the all-wheel drive vehicle during running of the vehicle in a normal running state on a low-friction road surface.

The object indicated above is achieved according to the following aspects of the present invention.

According to a first aspect of the invention, there is provided a control apparatus for controlling a driving force of an all-wheel drive vehicle that includes front wheels and rear wheels. The control apparatus includes a drive controller that is configured, during running of the all-wheel drive vehicle with a low-friction-road-surface running control mode being established, to cause a front driving force to be always generated for driving the front wheels and a rear driving force to be always generated for driving the rear wheels during running of the all-wheel drive vehicle, and to control the front driving force and the rear driving force such that a rear distribution ratio as a ratio of the rear driving force to a total driving force, which is a sum of the front driving force and the rear driving force, is not higher than half of a front distribution ratio as a ratio of the front driving force to the total driving force, in a normal running state that is other than a running starting state during running of the all-wheel drive vehicle. The low-friction-road-surface running control mode is suitable for running of the all-wheel drive vehicle on a low-friction road surface, and is one of at least one kind of predetermined control mode that is to be established for controlling the all-wheel drive vehicle.

According to a second aspect of the invention, in the control apparatus according to the first aspect of the invention, the drive controller is configured, in the normal running state with the low-friction-road-surface running control mode being established, to control the front driving force and the rear driving force such that the rear distribution ratio is higher in a decelerated running state of the all-wheel drive vehicle than in a non-decelerated running state of the all-wheel drive vehicle that includes constant-speed running and accelerated running of the all-wheel drive vehicle.

According to a third aspect of the invention, in the control apparatus according to the second aspect of the invention, the drive controller is configured, in the normal running state with the low-friction-road-surface running control mode being established, to control the front driving force and the rear driving force such that the rear distribution ratio is higher when the all-wheel drive vehicle is turning in the non-decelerated running state than when the all-wheel drive vehicle is not turning in the non-decelerated running state.

According to a fourth aspect of the invention, in the control apparatus according to the third aspect of the invention, the drive controller is configured, in the normal running state with the low-friction-road-surface running control mode being established, to control the front driving force and the rear driving force such that the rear distribution ratio is higher when the all-wheel drive vehicle is turning than when the all-wheel drive vehicle is being decelerated.

According to a fifth aspect of the invention, in the control apparatus according to any one of the first through fourth aspects of the invention, the drive controller is configured, in the running starting state with the low-friction-road-surface running control mode being established, to control the front driving force and the rear driving force such that the rear distribution ratio is higher than half of the front distribution ratio.

In the control apparatus according to the first aspect of the invention, during running of the all-wheel drive vehicle with the low-friction-road-surface running control mode being established, the front driving force and the rear driving force are always generated, and the front driving force and the rear driving force are controlled such that the rear distribution ratio is not higher than half of the front distribution ratio, in the normal running state. In other words, the front driving force and the rear driving force are controlled such that the rear distribution ratio does not exceed the half of the front distribution ratio. It was found that, during running of the all-wheel drive vehicle on the low-friction road surface in the normal running state, even when the rear distribution ratio is not higher than half of the front distribution ratio, a stability can be obtained in an all-wheel drive state in which the front driving force and the rear driving force are generated. This makes it possible to suppress a reduction of maneuverability while ensuring the stability of the all-wheel drive vehicle during running of the vehicle in the normal running state on the low-friction road surface.

In the control apparatus according to the second aspect of the invention, in the normal running state with the low-friction-road-surface running control mode being established, the front driving force and the rear driving force are controlled such that the rear distribution ratio is higher in the decelerated running state than in the non-decelerated running state. This makes it possible to advantageously obtain both the stability and maneuverability of the all-wheel drive vehicle during running on the low-friction road surface in the normal running state.

In the control apparatus according to the third aspect of the invention, in the normal running state with the low-friction-road-surface running control mode being established, the front driving force and the rear driving force are controlled such that the rear distribution ratio is higher when the all-wheel drive vehicle is turning in the non-decelerated running state than when the all-wheel drive vehicle is not turning in the non-decelerated running state. This makes it possible to advantageously obtain both the stability and maneuverability of the all-wheel drive vehicle during running on the low-friction road surface in the normal running state.

In the control apparatus according to the fourth aspect of the invention, in the normal running state with the low-friction-road-surface running control mode being established, the front driving force and the rear driving force are controlled such that the rear distribution ratio is higher when the all-wheel drive vehicle is turning than when the all-wheel drive vehicle is being decelerated. This makes it possible to advantageously obtain both the stability and maneuverability of the all-wheel drive vehicle during running on the low-friction road surface in the normal running state.

In the control apparatus according to the fifth aspect of the invention, in the running starting state with the low-friction-road-surface running control mode being established, the front driving force and the rear driving force are controlled such that the rear distribution ratio is higher than half of the front distribution ratio. This makes it possible to suppress tire slippage during running on the low-friction road surface in the running starting state.

### BRIEF DESCRIPTION OF THE DRAWINGS

FIG. 1 is a view schematically showing a construction of a vehicle to which the present invention is applied, for explaining main parts of control functions for various controls in the vehicle;
FIG. 2 is a flow chart showing main portions of control operations performed by an electronic control apparatus, namely, a control routine executed by the electronic control apparatus for suppressing a reduction of maneuverability while ensuring a stability of the vehicle during running of the vehicle in a normal running state;
FIG. 3 is a view explaining an example of setting of a rear distribution ratio in a snow mode;
FIG. 4 is a view explaining examples of a relationship between an axle load distribution and a longitudinal acceleration during decelerated running of the vehicle; and
FIG. 5 is a flow chart showing main portions of control operations performed by the electronic control apparatus, namely, a control routine executed by the electronic control apparatus for suppressing the reduction of maneuverability while ensuring the stability of the vehicle during running of the vehicle in a normal running state, wherein this control routine corresponds to a sub-routine executed at step S80 of the control routine shown in the flow chart of FIG. 2.

### DETAILED DESCRIPTION OF PREFERRED EMBODIMENT

Hereinafter, an embodiment of the invention will be described in detail with reference to the accompanying drawings.

### EMBODIMENT

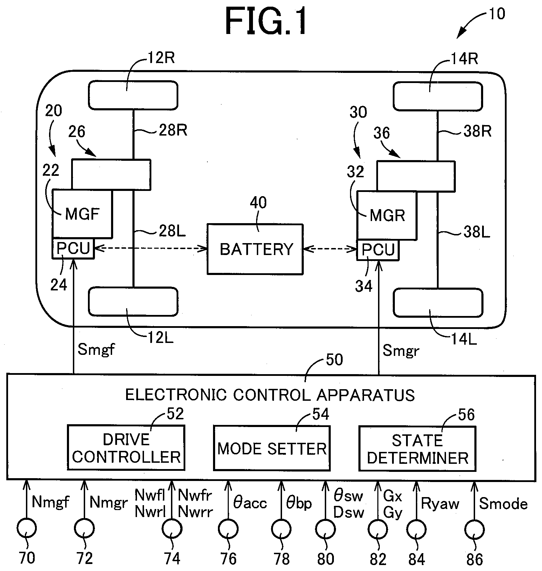

FIG. 1 is a view schematically showing a construction of a vehicle 10 to which the present invention is applied, for explaining main parts of control functions for various controls in the vehicle 10. As shown in FIG. 1, the vehicle 10 includes right and left front wheels 12, right and left rear wheels 14, a front drive apparatus 20 and a rear drive apparatus 30. The front wheels 12 consist of a right front wheel 12R and a left front wheel 12L. The rear wheels 14 consist of a right rear wheel 14R and a left rear wheel 14L. The front drive apparatus 20 is a front-wheel drive apparatus for driving the front wheels 12. The rear drive apparatus 30 is a rear-wheel drive apparatus for driving the rear wheels 14. The rear drive apparatus 30 is provided independently of the front drive apparatus 20. The vehicle 10 further includes a battery 40 that is a chargeable and dischargeable DC power source. It is noted that the term "right and left" refers to right and left relative to a forward direction of the vehicle 10.

The vehicle 10 corresponds to "all-wheel drive vehicle" recited in the appended claims, and is capable of adjusting distribution of a driving force between the front wheels 12 and the rear wheels 14. The vehicle 10 has two front wheels 12 and two rear wheels 14. Thus, the vehicle 10 is a four-wheel drive vehicle having four drive wheels. In the present embodiment, all-wheel drive (AWD) and four-wheel drive (4WD) are synonymous with each other. The vehicle 10 is capable of running with AWD control (also known as AWD state) in which the front wheels 12 and rear wheels 14 are driven, and also with two-wheel drive (2WD) control (also known as 2WD state) in which only the front wheels 12 or rear wheels 14 are driven. For example, the vehicle 10 is capable of running with front-wheel drive (FWD) control (also known as FWD state) in which only the front wheels 12 are driven, and/or with rear-wheel drive (RWD) control (also known as RWD state) in which only the rear wheels 14 are driven.

The front drive apparatus 20 includes a front motor 22 (see "MGF" in FIG. 1), a front PCU (power control unit) 24 and a front force transmission device 26. The rear drive apparatus 30 includes a rear motor 32 (see "MGR" in FIG. 1), a rear PCU 34 and a rear force transmission device 36.

Each of the front motor 22 and the rear motor 32 is a known rotary electric machine (so-called motor generator) serving as a force source of the vehicle 10. The front motor 22 is connected to the battery 40 through the front PCU 24. The rear motor 32 is connected to the battery 40 through the rear PCU 34.

The front PCU 24 is an electric-power control device that includes, for example, an inverter, and controls an electric power exchanged between the battery 40 and the front motor 22. The front PCU 24 controls the front motor 22. The rear PCU 34 is an electric-power control device that includes, for example, an inverter, and controls the electric power exchanged between the battery 40 and the rear motor 32. The rear PCU 34 controls the rear motor 32.

The front force transmission device 26 includes a gear mechanism (not shown) connected to the front motor 22, a differential gear device (not shown) connected to the gear mechanism, and front drive shafts 28 connecting between the differential gear device and the front wheels 12. The front drive shafts 28 include a left front drive shaft 28L and a right front drive shaft 28R. The front force transmission device 26 is a front-wheel force transmission device that transmits a power from the front motor 22 to the front wheels 12.

The rear force transmission device 36 includes a gear mechanism (not shown) connected to the rear motor 32, a differential gear device (not shown) connected to the gear mechanism, and rear drive shafts 38 connecting between the differential gear device and the rear wheels 14. The rear drive shafts 38 include a left rear drive shaft 38L and a right rear drive shaft 38R. The rear force transmission device 36 is a rear-wheel force transmission device that transmits a power from the rear motor 32 to the rear wheels 14.

The vehicle 10 further includes an electronic control apparatus 50 as a control apparatus that is configured to perform various control operations. The electronic control apparatus 50 includes a so-called microcomputer incorporating a CPU, a ROM, a RAM and an input-output interface. The CPU performs the various control operations of the vehicle 10, by processing various input signals, according to control programs stored in the ROM, while utilizing a temporary data storage function of the RAM. The electronic control apparatus 50 corresponds to "control apparatus" recited in the appended claims.

The electronic control apparatus 50 is configured to receive various signals based on detection values detected by various sensors provided in the vehicle 10. The various sensors include an MGF rotation sensor 70, an MGR rotation sensor 72, wheel speed sensors 74, an accelerator-opening degree sensor 76, a brake sensor 78, a steering sensor 80, a G sensor 82, a yaw rate sensor 84 and a mode selection switch 86. The various signals include, for example, an MGF rotational speed Nmgf, an MGR rotational speed Nmgr, a left-front-wheel rotational speed Nwfl, a right-front-wheel rotational speed Nwfr, a left-rear-wheel rotational speed Nwr1 and a right-rear-wheel rotational speed Nwrr. The various signals further include an accelerator opening degree θacc, a brake operation amount θbp, a steering angle θsw, a steering direction Dsw, a longitudinal acceleration Gx, a lateral acceleration Gy, a yaw rate Ryaw and a mode selection signal Smode. The electronic control apparatus 50 obtains a vehicle running speed V based on, for example, the left-front-wheel rotational speed Nwfl, the right-front-wheel rotational speed Nwfr, the left-rear-wheel rotational speed Nwrl and the right-rear-wheel rotational speed Nwrr.

The MGF rotational speed Nmgf is a rotational speed of the front motor 22. The MGR rotational speed Nmgr is a rotational speed of the rear motor 32. The accelerator opening degree θacc is a signal that indicates an amount of an accelerating operation made by a vehicle driver (a driver of the vehicle 10) or an amount of an accelerator operation made by the vehicle driver. The brake operation amount θbp is a signal that indicates a state of a brake pedal being operated by the vehicle driver to activate wheel brakes, and also indicates an amount of a depressing operation made on the brake pedal by the vehicle driver. The steering angle θsw is a steering angle of a steering wheel. The steering direction Dsw is a steering direction of the steering wheel. The longitudinal acceleration Gx is an acceleration of the vehicle 10 in a longitudinal direction of the vehicle 10. The lateral acceleration Gy is an acceleration of the vehicle 10 in a lateral direction of the vehicle 10. The yaw rate Ryaw is a rotary angular speed of the vehicle 10 around a vertical axis of the vehicle 10.

The mode selection switch 86 is a manually operated switch to select a suitable one of at least one kind of predetermined control mode MODEcn for controlling the vehicle 10. The mode selection switch 86 is an operator of automatic-return type, i.e., momentary type, which is to returned to its original position when no external force is applied thereto. The mode selection signal Smode is a signal indicating that the mode selection switch 86 has been manually operated. The mode selection signal Smode is outputted each time the mode selection switch 86 is operated. The control mode MODEcn is one of a plurality of kinds of predetermined control modes MODEcnf that are suitable for respective kinds of running of the vehicle 10.

In the present embodiment, the at least one kind of predetermined control mode MODEcn consists of a plurality of kinds of predetermined control modes MODEcnf include, for example, predetermined normal mode, power mode, eco mode and snow mode. The normal mode is, for example, a predetermined control mode MODEcn for enabling the vehicle 10 to run in a state in which a power performance and an energy efficiency are both satisfactorily obtained. The power mode is, for example, a predetermined control mode MODEcn for enabling the vehicle 10 to run in a state in which the power performance is prioritized over the energy efficiency, as compared to the normal mode. The eco mode is, for example, a predetermined control mode MODEcn for enabling the vehicle 10 to run in a state in which the energy efficiency is prioritized over the power performance, as compared to the normal mode. The snow mode is, for example, a predetermined control mode MODEcn for enabling the vehicle 10 to run in a stable state on, for example, a low µ road. The low µ road has a road surface with a very low friction coefficient, such as a snowy or icy road. The snow mode is suitable for running of the vehicle 10 on a low-friction road surface, and corresponds to "low-friction-road-surface running control mode" that is recited in the appended claims.

The mode selection switch 86 is operated to select, as the control mode MODEcn, the normal mode, power mode, eco mode, snow mode and normal mode,.... in this order. The control mode MODEcn is placed in the normal mode, power mode, eco mode, snow mode and normal mode,.... in this order, each time the mode selection signal Smode is outputted. The mode selection switch 86 may include, for example, a switch operated to establish the normal mode, power mode and eco mode, and a switch operated to establish the snow mode, such that the two switches are separated from each other.

The electronic control apparatus 50 outputs various command signals to various devices provided in the vehicle 10. The various devices include, for example, the front PCU 24 and the rear PCU 34. The various command signals include, for example, an MGF control command signal Smgf and an MGR control command signal Smgr. The MGF control command signal Smgf is a torque command value for controlling the MGF torque Tmgf, which is a torque of the front motor 22. The MGR control command signal Smgr is a torque command value for controlling the MGR torque Tmgr, which is a torque of the rear motor 32.

The electronic control apparatus 50 includes a drive controller 52 and a mode setter 54, for performing various controls in the vehicle 10.

The drive controller 52 controls the front drive apparatus 20 and the rear drive apparatus 30. The drive controller 52 calculates a drive request amount DEM requested to the vehicle 10 by the vehicle driver, by applying the accelerator opening degree θacc and the vehicle running speed V to a drive request amount map. The drive request amount map is a relationship for obtaining the drive request amount DEM, which is obtained and stored in advance, for example, experimentally or by design, that is, which is determined in advance. The drive request amount DEM may be a requested driving torque Tddem or a requested driving force Fddem, which are requested values of the driving torque Td and driving force Fd that are to be applied to the wheels (front wheels 12, rear wheels 14). The drive controller 52 controls the front motor 22 and the rear motor 32 so as to establish the requested driving torque Tddem. It is noted that the driving torque and the driving force are synonymous with each other unless otherwise specified.

The driving force Fd is a sum of a front driving force Fdf and a rear driving force Fdr, and corresponds to "total driving force" recited in the appended claims. The front driving force Fdf is to be generated for driving the front wheels 12, and corresponds to "front driving force" recited in the appended claims. The rear driving force Fdr is to be generated for driving the rear wheels 14, and corresponds to "rear driving force" recited in the appended claims. A required driving force Fddem is a sum of a required front driving force Fdfdem, which is a required value of the front driving force Fdf, and a required rear driving force Fdrdem, which is a required value of the rear driving force Fdr. The drive controller 52 outputs the MGF control command signal Smgf to the front PCU 24 for controlling the front motor 22 so as to achieve the required front driving force Fdfdem. The drive controller 52 outputs the MGR control command signal Smgr to the rear PCU 34 for controlling the rear motor 32 so as to achieve the required rear driving force Fdrdem.

The mode setter 54 sets one of the predetermined control modes MODEcnf as the control mode MODEcn. For example, each time the mode selection switch 86 is manually operated, the control mode MODEcn is set by the mode setter 54 to the normal mode, power mode, eco mode, snow mode, normal mode, ... in this order.

When the normal mode is established as the control mode MODEcn, the drive controller 52 calculates the drive request amount DEM that balances the energy efficiency and the power performance, for example, for an acceleration operation. When the power mode is established as the control mode MODEcn, the drive controller 52 calculates the drive request amount DEM that accelerates output, for example, for the acceleration operation. When the eco mode is established as the control mode MODEcn, the drive controller 52 calculates the drive request amount DEM that suppresses the output, for example, for the acceleration operation.

When any one of the normal mode, power mode and eco mode is being established as the control mode MODEcn in a running starting state, the drive controller 52 drives the vehicle 10 with, for example, an AWD control. When any one of the normal mode, power mode and eco mode is being established as the control mode MODEcn in a normal running state that is other than the running starting state during running of the vehicle 10, the drive controller 52 drives the vehicle 10 with, for example, a FWD control. In event of slipping of the front wheels 12, for example, when the vehicle 10 is being driven with the FWD control, the drive controller 52 switches from the FWD control to the AWD control by which the front driving force Fdf and rear driving force Fdr are controlled. During the running of the vehicle 10 with any one of the normal mode, power mode and eco mode, the drive controller 52 sets a front distribution ratio [%] and a rear distribution ratio [%], based on a predetermined driving-force distribution ratio between the front and rear wheels 12, 14. The front distribution ratio is a ratio of the front driving force Fdf with respect to the driving force Fd (that is the sum of the front driving force Fdf and the rear driving force Fdr), and corresponds to "front distribution ratio" recited in the appended claims. The rear distribution ratio is a ratio of the rear driving force Fdr with respect to the driving force Fd, and corresponds to "rear distribution ratio" recited in the appended claims. For example, when the driving force Fd is distributed equally between the front wheels 12 and the rear wheels 14, "front distribution ratio : rear distribution ratio" is considered to be "50:50".

The running starting state is a state in which the vehicle 10 has started running from a stopped state during running of the vehicle 10. The running starting state is, for example, a state in which the accelerator is ON and the vehicle running speed V is lower than a low-running-speed determination value Vlow. The low-running-speed determination value Vlow is a predetermined threshold used to determine whether the vehicle 10 is in the running starting state. The low-running-speed determination value Vlow is, for example, 10 km/h. The normal running state is a state that is other than the running starting state during running of the vehicle 10. The normal running state includes a non-decelerated running state and a decelerated running state. The non-decelerated running state includes a constant-speed running and an accelerated running, and is a running state in which the vehicle running speed V is not lower than the low-running-speed determination value Vlow. The non-decelerated running state includes a running state in which the vehicle 10 is running straight, a running state in which the vehicle 10 is changing lanes and a running state in which the vehicle 10 is turning, for example. The decelerated running state is a running state in which the vehicle 10 is decelerating due to, for example, the accelerator being OFF or brake being ON. In the non-decelerated running state, the driving force Fd is a positive value. In the decelerated running state, the driving force Fd is a negative value. In the decelerated running state, the driving force Fd is synonymous with the braking force. A positive value of the driving force Fd is a value by which the vehicle 10 is accelerated. A negative value of the driving force Fd is a value by which the vehicle 10 is decelerated. The driving force Fd (braking force) during deceleration of the vehicle 10 due to the accelerator being OFF is generated by regenerative braking, for example, through a regenerative operation of the front motor 22 or rear motor 32. Where the power source is an engine, the braking force associated with acceleration OFF is generated by an engine brake.

There will be described the rear distribution ratio in a case in which the snow mode is being established as the control mode MODEcn.

The higher the rear distribution ratio, the better a straight running stability of the vehicle 10. However, experiments have revealed that increasing the rear distribution ratio beyond a certain level reduces an effect of improving the straight running stability and reduces also the maneuverability. A load distribution in the rear driveshafts 38 (rear load distribution) is generally set at approximately 30-45[%]. Therefore, when the rear distribution ratio exceeds the certain level and approaches the rear weight distribution, tire characteristics cause the driving force Fd to be deflected in a straight running direction, reducing the vehicle's ability to retain lateral forces, making it difficult to achieve the effect of improving the straight running stability. Increasing the straight running stability increases a tendency of understeer and reduces an initial steering responsiveness, thereby reducing the maneuverability. Further, if the rear distribution ratio is made is too high, a yaw motion of the vehicle 10 is increased after start of turning of the vehicle 10, leading to a tendency of oversteer and reduction of a turning stability. It was found that tire slippage on a low µ road can be suppressed and the stability is improved, even if the rear distribution ratio is not increased beyond the certain level, as long as the rear driving force Fdr is generated. That is, the rear distribution ratio higher than the certain level is only needed in the running start state or wheel-off state that requires an off-road capability. It was found that setting the rear distribution ratio below the certain level can achieve both the stability and the comfortable maneuverability in the normal running state.

The above-described "certain level" is half of the front distribution ratio, for example. In the vehicle 10, it was found that the stability can be maintained in the normal running state even if the rear distribution ratio is lower than half of the front distribution ratio, as long as the vehicle 10 is in the AWD state in which the front driving force Fdf and the rear driving force Fdr are both generated. Further, in the vehicle 10, it was found that a reduction of the maneuverability is suppressed when the rear distribution ratio is lower than half of the front distribution ratio. These findings are considered significant when the vehicle 10 is driven to run on a low-µ road.

The electronic control apparatus 50 further includes a state determiner 56 for controlling the rear distribution ratio in the snow mode.

The state determiner 56 determines whether the snow mode is being established as the control mode MODEcn by the mode setter 54. The state determiner 56 determines whether the vehicle 10 is in the stopped state, depending on whether the vehicle running speed V is a zero determination value Vf. The state determiner 56 determines whether the vehicle 10 is in the running starting state, depending on whether the vehicle 10 is in the running state with the accelerator being ON and whether the vehicle running speed V is lower than the low-running-speed determination value Vlow. The state determiner 56 determines whether the vehicle 10 is in the normal running state, depending on whether the vehicle 10 is in the running state other than the running starting state.

When the state determiner 56 determines that the snow mode is being established as the control mode MODEcn, the drive controller 52 causes the front driving force Fdf and the rear driving force Fdr to be always generated during running of the vehicle 10. Further, the drive controller 52 controls the front driving force Fdf and the rear driving force Fdr such that the rear distribution ratio is not higher than half of the front distribution ratio in the normal running state of the vehicle 10. In other words, the drive controller 52 controls the front driving force Fdf and the rear driving force Fdr such that the rear distribution ratio does not exceed half of the front distribution ratio in the normal running state of the vehicle 10. For example, the rear distribution ratio is controlled to 30[%] and the "front distribution ratio : rear distribution ratio" is controlled to "70 : 30", or alternatively, the rear distribution ratio is controlled to 15[%] and the "front distribution ratio : rear distribution ratio" is controlled to "85 : 15".

When the state determiner 56 determines that the snow mode is being established as the control mode MODEcn, the drive controller 52 controls the front driving force Fdf and the rear driving force Fdr such that the rear distribution ratio is higher than half of the front distribution ratio in the running starting state of the vehicle 10. For example, the rear distribution ratio is controlled to 45[%] and the "front distribution ratio : rear distribution ratio" is controlled to "55 : 45",

The above-described control of the rear distribution ratio control in the snow mode is a control executed to control distribution of the driving force between the front and rear wheels before the vehicle behavior becomes unstable. The normal running state of the vehicle 10 is a state in which the tires are not slipping or locking and the vehicle behavior is not unstable. In other words, the normal running state of the vehicle 10 is a state before the vehicle behavior becomes unstable.

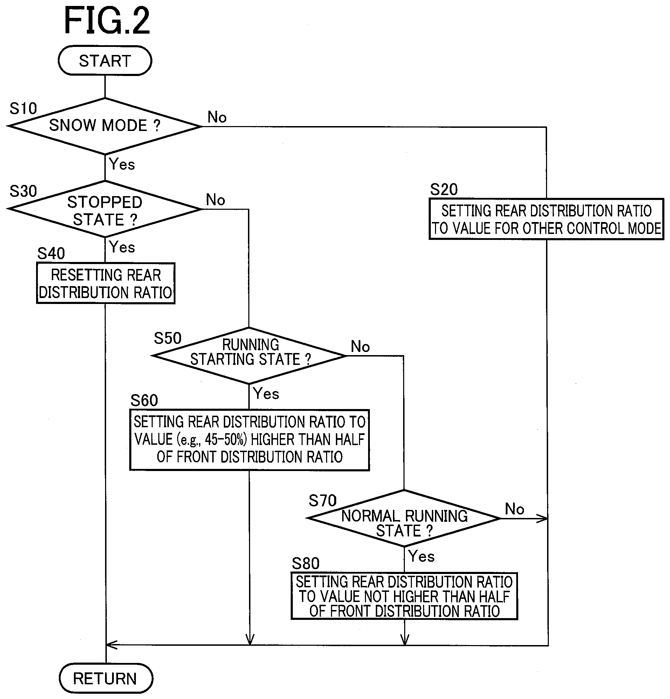

FIG. 2 is a flow chart showing main portions of control operations performed by the electronic control apparatus 50, namely, a control routine executed by the electronic control apparatus 50 for suppressing a reduction of the maneuverability while ensuring the stability of the vehicle 10 during running of the vehicle 10 in the normal running state. This control routine is executed in a repeated manner, for example.

As shown in FIG. 2, the control routine is initiated with step S10 corresponding to function of the state determiner 56, which is implemented to determine whether the sow mode is being established as the control mode MODEcn. When a negative determination is made at step S10, the control flow goes to step S20 corresponding to function of the drive controller 52, which is implemented to set the rear distribution ratio to a value suitable for the control mode MODEcn other than the snow mode. When an affirmative determination is made at step S10, step S30 corresponding to function of the state determiner 56 is implemented to determine whether the vehicle 10 is in the stopped state. When an affirmative determination is made at step S30, step S40 corresponding to function of the drive controller 52 is implemented whereby the setting of the rear distribution ratio is reset. When a negative determination is made at step S30, the control flow goes to step S50 corresponding to function of the state determiner 56, which is implemented to determine whether the vehicle 10 is in the running starting state. When an affirmative determination is made at step S50, step S60 corresponding to function of the drive controller 52 is implemented to cause the front driving force Fdf and the rear driving force Fdr to be generated and to set the rear distribution ratio to a value higher than half of the front distribution ratio. In this case, the rear distribution ratio is set to 45-50[%], for example. When a negative determination is made at step S50, the control flow goes to step S70 corresponding to function of the state determiner 56, which is implemented to determine whether the vehicle 10 is in the normal running state. When a negative determination is made at step S70, one cycle of execution of the control routine is terminated. When an affirmative determination is made at step S70, step S80 corresponding to function of the drive controller 52 is implemented to cause the front driving force Fdf and the rear driving force Fdr to be generated and to set the rear distribution ratio to a value not higher than half of the front distribution ratio.

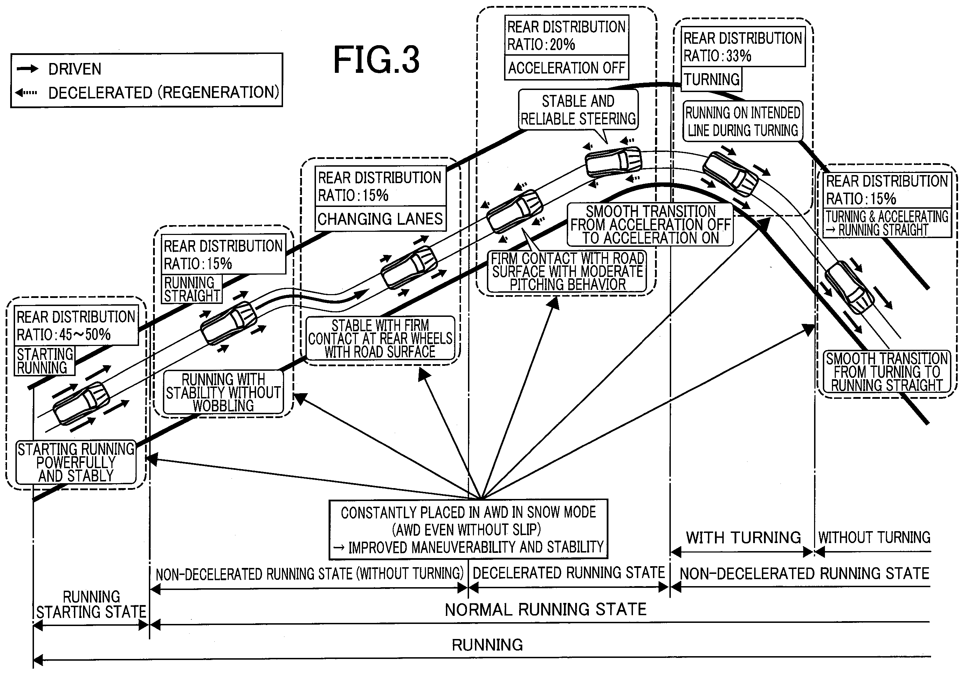

FIG. 3 is a view explaining an example of setting of the rear distribution ratio in the snow mode. In the example shown in FIG. 3, the vehicle 10 is always in the AWD state during running of the vehicle 10, whereby the maneuverability and the stability are improved. In the running starting state of the vehicle 10, the rear distribution ratio is set to value (e.g., approximately 45-50[%]) higher than half of the front distribution ratio, whereby the vehicle 10 can start running powerfully and stably. In the normal running state of the vehicle 10, the rear distribution ratio is set to value not higher than half of the front distribution ratio. In the normal running state, specifically, in the non-decelerated running state (such as when the vehicle 10 is running straight and when the vehicle 10 is changing lanes), the rear distribution ratio is set to approximately 15[%], for example, whereby the vehicle 10 can run straight with stability without wobbling. The vehicle 10 is in firm contact at the rear wheels 14 with the road surface, so as to be able to make stable lane changes. After turning, the vehicle 10 can be smoothly switched to straight running. In the normal running state, the rear distribution ratio is set to approximately 33[%], for example, during turning of the vehicle 10, particularly, in a latter half stage of the turning in which an acceleration operation is made. Reducing the front driving force Fdf during the acceleration operation improves the maneuverability. Therefore, in the latter half stage of the turning, the front distribution ratio is reduced, and the rear distribution ratio is increased as compared to the non-decelerated running state without the turning. This makes it easier to run on the intended line during the turning.

The decelerated running state associated with acceleration OFF or brake ON increases the load distribution on the front drive shafts 28 (front load distribution), which could easily impair tire grip that is used for steering, on a low-µ road. It was found that, if the rear distribution ratio during deceleration of the vehicle 10 is increased as compared to the rear distribution ratio during the non-decelerated running state (such as when the vehicle 10 is running straight and when the vehicle 10 is changing lanes), the front distribution ratio is reduced, thereby making it easier to ensure the tire grip in a steering direction. It was found that increasing the rear distribution ratio generates an anti-dive force that moves a body (hereinafter referred to as "vehicle body") of the vehicle 10, thereby suppressing excessive pitching behavior and suppressing increase of the front load distribution on a low µ road. The anti-dive force is a force that reduces a nose dive that is a phenomenon in which the vehicle body tilts forward due to the braking force acting on the rear wheels 14 or load transfer to the front wheels 12, through suspension characteristics. The anti-dive force is a force that lifts the vehicle body down, particularly, prevents the rear wheels 14 from lifting up. In the decelerated running state, as in the non-decelerated running state, the rear distribution ratio is kept not higher than half of the front distribution ratio whereby the stability of the vehicle 10 is ensured. If the rear distribution ratio is increased too much in the decelerated running state, the pitching behavior is less likely to be caused thereby making it difficult to feel increase of the grip of the front wheels 12. Therefore, the rear distribution ratio is set within a range that is at most half of the front distribution ratio. In the decelerated running state, the rear distribution ratio is set higher as compared to the non-decelerated running state (except when the vehicle 10 is turning), and is set to not higher than half of the front distribution ratio. It was found that this setting of the rear distribution ratio ensures stability, comfortable maneuverability and moderate pitching behavior in the decelerated running state. As shown in FIG. 3, in the decelerated running state (with acceleration OFF) in the normal running state, the rear distribution ratio is set to, for example, approximately 20[%], whereby the vehicle 10 can be decelerated with firm contact with the road surface and with moderate pitching behavior. The vehicle 10 can be decelerated in a stable and easy-to-steer state. When vehicle 10 is changed from deceleration to turning, the transition from acceleration OFF to acceleration ON is improved.

When the state determiner 56 determines that the snow mode is being established as the control mode MODEcn, the drive controller 52 controls the front driving force Fdf and the rear driving force Fdr in the normal running state such that the rear distribution ratio in the decelerated running state is higher than the rear distribution ratio in the non-decelerated running state. However, in the normal running state, when the vehicle 10 is turning even in the non-decelerated running state, the drive controller 52 controls the front driving force Fdf and the rear driving force Fdr such that the rear distribution ratio during the turning is higher than the rear distribution ratio during the non-decelerated running state without the turning. In this instance, in the normal running state, the drive controller 52 controls the front driving force Fdf and the rear driving force Fdr such that the rear distribution ratio during the turning is higher than the rear distribution ratio in the decelerated running state.

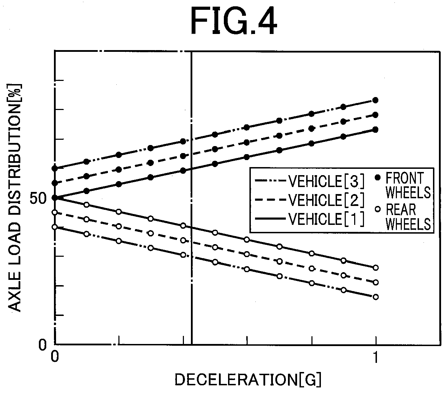

FIG. 4 is a view explaining examples of a relationship between an axle load distribution and the longitudinal acceleration Gx in the decelerated running state. In FIG. 4, the "AXLE LOAD DISTRIBUTION" indicates the front load distribution and the rear load distribution, and the "DECELERATION" indicates an absolute value of the longitudinal acceleration Gx in the decelerated running state. In a vehicle [1] represented by solid lines, the "front load distribution : rear load distribution" is set to "50:50" in the stopped state. In a vehicle [2] represented by broken lines, the "front load distribution : rear load distribution" is set to "55:45" in the stopped state. In a vehicle [3] represented by two-dot chain lines, the "front load distribution : rear load distribution" is set to "60:40" in the stopped state. On a low µ road, when the acceleration is OFF or the brake is ON, changes in an area enclosed by one-dot chain line, for example, are caused by deceleration. In the vehicle [3], the front load distribution in the decelerated running state reaches, for example, 70[%], thereby making the grip of the front wheels [12] more likely to be saturated and leading to a tendency for understeer with difficulty in steering. Therefore, in the decelerated running state, by reducing the front distribution ratio and making the rear distribution ratio higher as compared to the non-decelerated running state without the turning, the stability, comfortable maneuverability and moderate pitching behavior can be easily ensured in the decelerated running state. In cold climates, for example, on a low µ road, the tendency for understeer is likely to occur, so that consideration must be given thereto. The same applies to the vehicles [1] and [2] in which the front load distribution is likely to be excessively increased in the decelerated running state. Further, in the vehicle [3], the rear load distribution is reduced to, for example, approximately 30[%]. Therefore, if the rear distribution ratio is increased too much in the decelerated running state, the rear wheels 14 become more likely to slip and become prone to oversteer. Therefore, in the decelerated running state, it is appropriate to increase the rear distribution ratio while maintaining an upper limit of the rear distribution ratio that ensures stability.

When determining that the vehicle 10 is in the normal running state, the state determiner 56 determines whether the vehicle 10 is in the turning state, the non-turning state (such as when the vehicle 10 is running straight and when the vehicle 10 is changing lanes) or the decelerated running state. For example, the state determiner 56 determines whether the vehicle 10 is in the non-decelerated running state, depending on whether the accelerator is ON with the running speed V being equal to or higher than the low-running-speed determination value Vlow. When determining that the vehicle 10 is in the non-decelerated running state, the state determiner 56 determines whether the vehicle 10 is turning or not turning, based on the steering angle θsw, steering direction Dsw, lateral acceleration Gy and yaw rate Ryaw, for example. The state determiner 56 determines whether the vehicle 10 is in the decelerated running state, based on the accelerator opening degree θacc, brake operation amount θbp and longitudinal acceleration Gx, for example.

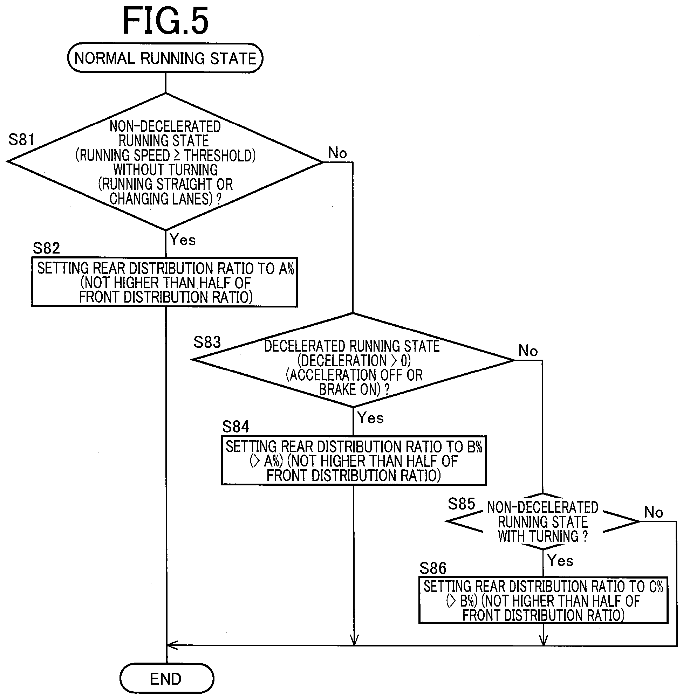

FIG. 5 is a flow chart showing main portions of control operations performed by the electronic control apparatus 50, namely, a control routine executed by the electronic control apparatus 50 for suppressing the reduction of maneuverability while ensuring the stability of the vehicle 10 during running in the normal running state, wherein this control routine corresponds to a sub-routine executed at step S80 of the control routine shown in the flow chart of FIG. 2. This control routine is executed in a repeated manner, for example.

As shown in FIG. 5, the control routine is initiated with step S81 corresponding to function of the state determiner 56, which is implemented to determine whether the vehicle 10 is in the non-decelerated running state without the turning. When an affirmative determination is made at step S81, step S82 corresponding to function of the drive controller 52 is implemented to generate the front driving force Fdf and the rear driving force Fdr. In this instance, the rear distribution ratio is set to a value, e.g., A [%] (see 15[%] in FIG. 3), which is not higher than half of the front distribution ratio. When a negative determination is made at step S81, the control goes to step S83 corresponding to function of the state determiner 56, which is implemented to determine whether the vehicle 10 is in the decelerated running state. When an affirmative determination is made at step S83, step S84 corresponding to function of the drive controller 52 is implemented to generate the front driving force Fdf and the rear driving force Fdr. In this instance, the rear distribution ratio is set to a value, e.g., B [%] (> A [%]) (see 20[%] in FIG. 3), which is not higher than half of the front distribution ratio and which is higher than when the vehicle 10 is in the non-decelerated running state without the turning. When a negative determination is made at step S83, the control goes to step S85 corresponding to function of the state determiner 56, which is implemented to determine whether the vehicle 10 is in the non-decelerated running state with the turning. When a negative determination is made at step S85, one cycle of execution of the control routine is terminated. When an affirmative determination is made at step S85, step S86 corresponding to function of the drive controller 52 is implemented to generate the front driving force Fdf and the rear driving force Fdr. In this instance, the rear distribution ratio is set to a value, e.g., C [%] (> B [%]) (see 33[%] in FIG. 3), which is not higher than half of the front distribution ratio and which is higher than when the vehicle 10 is in the decelerated running state without the turning.

As described above, in the present embodiment, during running of the vehicle 10 with the snow mode being established as the control mode MODEcn, the front driving force Fdf and the rear driving force Fdr are always generated, and the front driving force Fdf and the rear driving force Fdr are controlled such that the rear distribution ratio is not higher than half of the front distribution ratio, in the normal running state. In other words, the front driving force Fdf and the rear driving force Fdr are controlled such that the rear distribution ratio does not exceed the half of the front distribution ratio. This makes it possible to suppress a reduction of the maneuverability while ensuring the stability of the vehicle 10 during running of the vehicle in the normal running state on a low µ road.

In the present embodiment, in the normal running state with the snow mode being established, the front driving force Fdf and the rear driving force Fdr are controlled such that the rear distribution ratio is higher in the decelerated running state than in the non-decelerated running state. This makes it possible to advantageously obtain both the stability and maneuverability of the vehicle 10 during running on a low µ road in the normal running state.

In the present embodiment, in the normal running state with the snow mode being established, the front driving force Fdf and the rear driving force Fdr are controlled such that the rear distribution ratio is higher when the vehicle 10 is turning in the non-decelerated running state than when the vehicle 10 is not turning in the non-decelerated running state. This makes it possible to advantageously obtain both the stability and maneuverability of the vehicle 10 during running on a low µ road in the normal running state.

In the present embodiment, in the normal running state with the snow mode being established, the front driving force Fdf and the rear driving force Fdr are controlled such that the rear distribution ratio is higher when the vehicle 10 is turning than when the vehicle 10 is being decelerated. This makes it possible to advantageously obtain both the stability and maneuverability of the vehicle 10 during running on a low µ road in the normal running state.

In the present embodiment, in the running starting state with the snow mode being established, the front driving force Fdf and the rear driving force Fdr are controlled such that the rear distribution ratio is higher than half of the front distribution ratio. This makes it possible to suppress tire slippage during running on a low µ road in the running starting state.

In the present embodiment, since the vehicle 10 is an electrically-operated AWD vehicle, it is possible to suppress reduction of energy efficiency where the AWD mode is always established.

While the preferred embodiment of the invention has been described in detail by reference to the drawings, it is to be understood that the invention may be otherwise embodied.

For example, in the above-described embodiment, the at least one kind of predetermined control mode MODEcn consists of the plurality of kinds of predetermined control modes MODEcnf that include the snow mode. When the snow mode is being established as the control mode MODEcn, the vehicle 10 during the running is constantly placed in the AWD state, and the front driving force Fdf and the rear driving force Fdr are controlled such that the rear distribution ratio is not higher than half of the front distribution ratio. However, the present invention is not limited to this detail. For example, the at least one kind of predetermined control mode MODEcn may consist of a single kind of predetermined control mode MODEcn that is the low-friction-road-surface running control mode that enables the vehicle 10 to be stably driven on a low µ road. In this case, the vehicle 10 during the running is constantly placed in the AWD state, and the front driving force Fdf and the rear driving force Fdr may be controlled such that the rear distribution ratio is not higher than half of the front distribution ratio, whereby both of the stability and the comfortable maneuverability can be obtained during running of the vehicle 10 on a low µ road in the normal running state. Further, in the above-described case, in the normal running state, the rear distribution ratio also in the non-decelerated running state with the turning, the non-decelerated running state without the turning and the decelerated running state may be set substantially in the same manners as in the above-described embodiment, whereby both of the stability and the comfortable maneuverability can be obtained during running of the vehicle 10 on a low µ road in the normal running state. Moreover, in the above-described case, the vehicle 10 during the running is constantly placed in the AWD state, and the front driving force Fdf and the rear driving force Fdr may be controlled such that the rear distribution ratio is higher than half of the front distribution ratio in the running starting state, whereby the tire slippage can be suppressed on a low µ road in the running starting state.

In the above-described embodiment, in the non-decelerated running state, the rear distribution ratio is set to a value that varies depending on whether the vehicle 10 is turning or the vehicle 10 is not turning (such as when the vehicle 10 is running straight and when the vehicle 10 is changing lanes). However, the present invention is not limited to this detail. For example, the rear distribution ratio in the non-decelerated running state may be set without distinguishing between the turning and the non-turning. Where the rear distribution ratio in the non-decelerated running state may be set without distinguishing between the turning and the non-turning, the rear distribution ratio in the non-decelerated running state is set to a value suitable for when the vehicle 10 is not turning. In this case, in the control routine shown in the flow chart of FIG. 5, step S81 is implemented to simply determine whether the vehicle 10 is in the non-decelerated running state, without determining whether the vehicle 10 is turning or is not turning. Further, in this case, steps S85 and S86 may be omitted in the control routine shown in the flow chart of FIG. 5.

In the above-described embodiment, the snow mode may be automatically established as the control mode MODEcn, for example, based on the running state of the vehicle 10 and an external environment of the vehicle 10.

In the above-described embodiment, the power source for driving the front wheels 12 may be, for example, an internal combustion engine, in place of or in addition to the front motor 22, and the power source for driving the rear wheels 14 may be, for example, an internal combustion engine, in place of or in addition to the rear motor 32. The vehicle 10 may be an in-wheel motor vehicle equipped with electric motors that are configured to drive both the front wheels 12 and the rear wheels 14 independently of one another. The vehicle 10 may be an AWD vehicle in which, based on drive of one of the pair of front wheels 12 and the pair of rear wheels 14, the power is distributed to the other of the pair of front wheels 12 and the pair of rear wheels 14, for example, through an electronically controlled coupling. In short, the present invention is applicable to any kind of AWD vehicle in which the distribution ratio between the front wheels 12 and the rear wheels 14 is adjustable.

It is to be understood that the embodiment described above is given for illustrative purpose only, and that the present invention may be embodied with various modifications and improvements which may occur to those skilled in the art.

### NOMENCLATURE OF ELEMENTS

10: vehicle (all-wheel drive vehicle)
12: front wheels
14: rear wheels
50: electronic control apparatus (control apparatus)
52: drive controller
54: mode setter

## Claims

1. A control apparatus (50) for controlling a driving force (Fd) of an all-wheel drive vehicle (10) that includes front wheels (12) and rear wheels (14),
the control apparatus (50) comprising:
a drive controller (52) that is configured, during running of the all-wheel drive vehicle (10) with a low-friction-road-surface running control mode being established, to cause a front driving force (Fdf) to be always generated for driving the front wheels (12) and a rear driving force (Fdr) to be always generated for driving the rear wheels (14) during running of the all-wheel drive vehicle (10), and to control the front driving force (Fdf) and the rear driving force (Fdr) such that a rear distribution ratio (Fdr/Fd) as a ratio of the rear driving force (Fdr) to a total driving force (Fd), which is a sum of the front driving force (Fdf) and the rear driving force (Fdr), is not higher than half of a front distribution ratio (Fdf/Fd) as a ratio of the front driving force (Fdf) to the total driving force (Fd), in a normal running state that is other than a running starting state during running of the all-wheel drive vehicle (10),
wherein the low-friction-road-surface running control mode is suitable for running of the all-wheel drive vehicle (10) on a low-friction road surface, and is one of at least one kind of predetermined control mode (MODEcn) that is to be established for controlling the all-wheel drive vehicle (10).

2. The control apparatus (50) according to claim 1,
wherein the drive controller (52) is configured, in the normal running state with the low-friction-road-surface running control mode being established, to control the front driving force (Fdf) and the rear driving force (Fdr) such that the rear distribution ratio (Fdr/Fd) is higher in a decelerated running state of the all-wheel drive vehicle (10) than in a non-decelerated running state of the all-wheel drive vehicle (10) that includes constant-speed running and accelerated running of the all-wheel drive vehicle (10).

3. The control apparatus (50) according to claim 2,
wherein the drive controller (52) is configured, in the normal running state with the low-friction-road-surface running control mode being established, to control the front driving force (Fdf) and the rear driving force (Fdr) such that the rear distribution ratio (Fdr/Fd) is higher when the all-wheel drive vehicle (10) is turning in the non-decelerated running state than when the all-wheel drive vehicle (10) is not turning in the non-decelerated running state.

4. The control apparatus (50) according to claim 3,
wherein the drive controller (52) is configured, in the normal running state with the low-friction-road-surface running control mode being established, to control the front driving force (Fdf) and the rear driving force (Fdr) such that the rear distribution ratio (Fdr/Fd) is higher when the all-wheel drive vehicle (10) is turning than when the all-wheel drive vehicle (10) is being decelerated.

5. The control apparatus (50) according to any one of claims 1-4,
wherein the drive controller (52) is configured, in the running starting state with the low-friction-road-surface running control mode being established, to control the front driving force (Fdf) and the rear driving force (Fdr) such that the rear distribution ratio (Fdr/Fd) is higher than half of the front distribution ratio (Fdf/Fd).
